# EUROPEAN PATENT SPECIFICATION

(11) **EP 1 813 468 B1**
(45) Date of publication and mention of the grant of the patent: **23.03.2011**
(21) Application number: 07000677.0
(22) Date of filing: 15.01.2007
(51) Int. Cl.: B60N 2/24, B60N 2/38

(54) **Seats**
Sitze
Sièges

(30) Priority: 28.01.2006 GB 0601741
(43) Date of publication of application: 01.08.2007
(73) Proprietor: AGCO SA, 60026 Beauvais (FR)
(72) Inventor: Jean-Baptiste, Florent, Fourneuil, 60112 Verderel les Sauqueuses (FR)
(74) Representative: Morrall, Roger

(56) References cited:
- DE-A1- 2 227 659
- FR-A- 808 127
- US-A- 1 826 643
- US-A- 5 374 106
- US-A- 5 868 469
- US-B1- 6 318 801

## Description

This invention relates to seats and in particular to folding passenger seats for use in vehicles such as agricultural tractors or combines.

There is a requirement to provide a folding passenger seat for such vehicles which when folded in a stowed position occupies as little space as possible.

FR-808,127 discloses a folding seat corresponding to the preamble of claim 1 and which comprises a seat part which is pivotally and slidably mounted in a frame between a generally horizontal working position and a generally vertical stowed position.

It is an object of the present invention to provide an improved form of folding passenger seat for use in a vehicle such as an agricultural tractor or combine.

Thus according to the present invention there is provided a folding passenger seat arrangement for use in a tractor, the seat arrangement comprising a mounting support for mounting on the inside of a fender of a rear wheel of a tractor and, a seat which is pivotally and slidably mounted on the support for movement between a generally horizontal working position and a lower generally vertical stowed position, characterised in that the mounting support is a single channel section with a track slot cut in two opposing sides of the channel, the seat including a seat pan and an arm projecting therefrom which includes, at a location remote from the pan, pivot means in the form of first pin means which projects from the arm and engages and slides along the slots in the channel as the seat pivots between its working and stowed positions, the arm also including first abutment means in the form of a second pin means which projects from the arm at a location intermediate the first pin means and the seat pan, the second pin means engaging the second abutment means in the form of upper notches formed in the sides of the channel adjacent the upper end of the channel when the seat is in its working position and also engaging the third abutment means in the form of lower notches formed in the sides of the channel adjacent the lower end of the channel when the seat is in its stowed position.

The seat is mounted for pivoting about a generally horizontal axis on the mounting support by a pivot means, said pivot means also being slideable in a track in the support so that the seat can be pivoted and towered relative to the support as it moves from its working to its stowed position.

The pivot means may be arranged to contact an upper end of the track in the mounting Support when the seat is in its working position with the seat being held generally horizontal by a first abutment on the seat, located between the pivot means and the seat, which contacts a second abutment on the mounting support so that any weight placed on the seat forces the pivot means against the upper end of the track.

Preferably the mounting support includes a third abutment located below the second abutment which is contacted by the first abutment when the seat is moved to its stowed position. Preferably also, when the seat is in its stowed position the weight of the seat forces the pivot means into contact with the lower end of the track and the first abutment into contact with the third abutment thus maintaining the seat safely stowed.

One embodiment of the present invention will now be described, by way of example only, with reference to the accompanying drawings in which:
Figure 1 shows a perspective view of a folding seat in accordance with the invention in its working position in a tractor cab;
Figure 2 shows a plan view of the seat of Figure 1 in its stowed generally upright position;

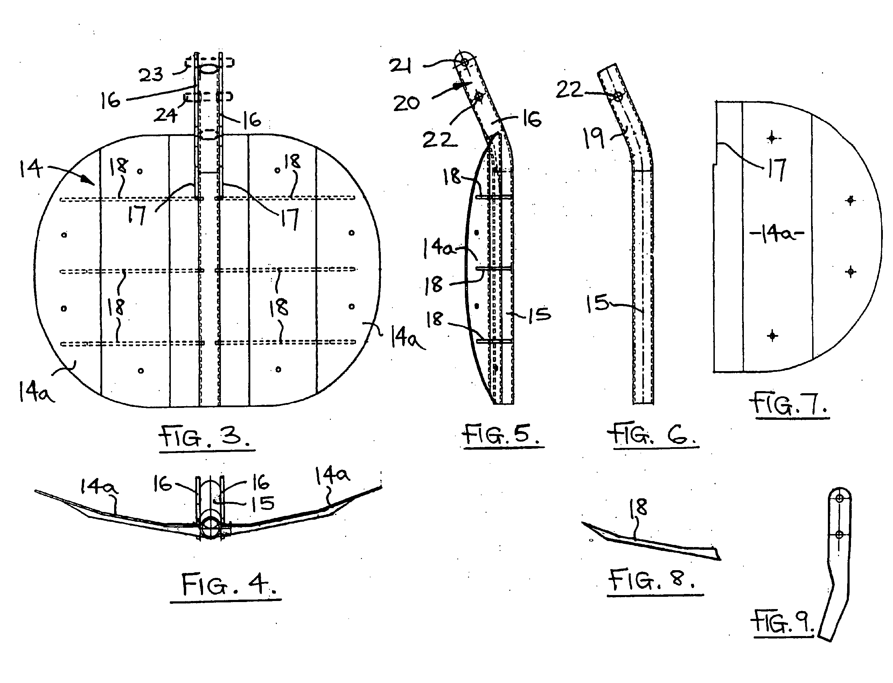

Figures 3, 4 and 5 show plan, side and end views of a seat pan used in the seat of Figures 1 and 2;
Figures 6, 7, 8 and 9 show component parts of the seat pan of Figures 3 to 5;
Figures 10 to 12 show plan, side and end views respectively of a mounting support for the seat of Figures 1 and 2; and
Figures 13a to 13f show the seat in various positions between the working position of Figure 13a and the fully stowed position of Figure 13f.

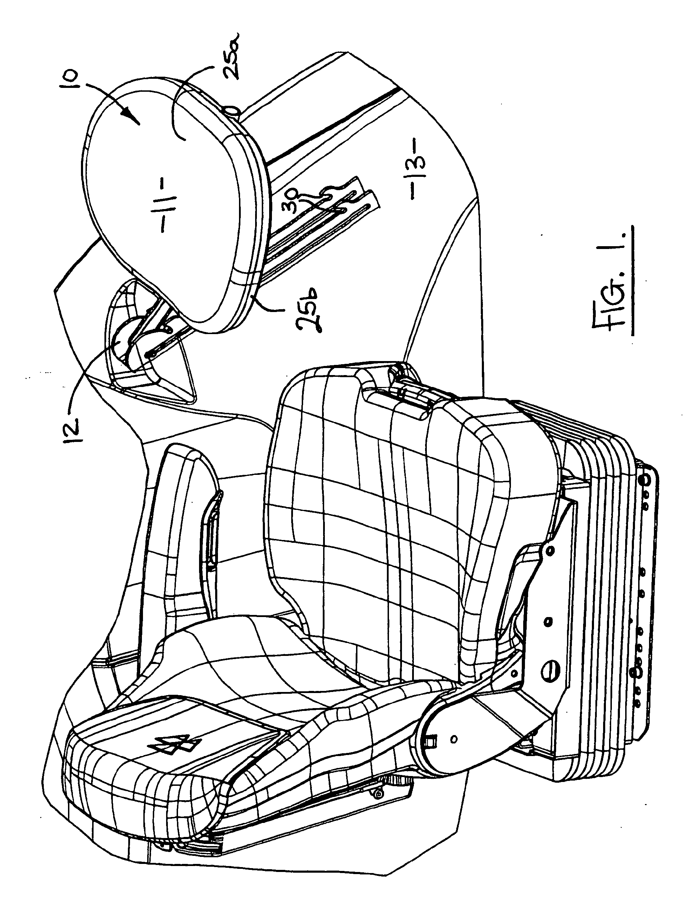

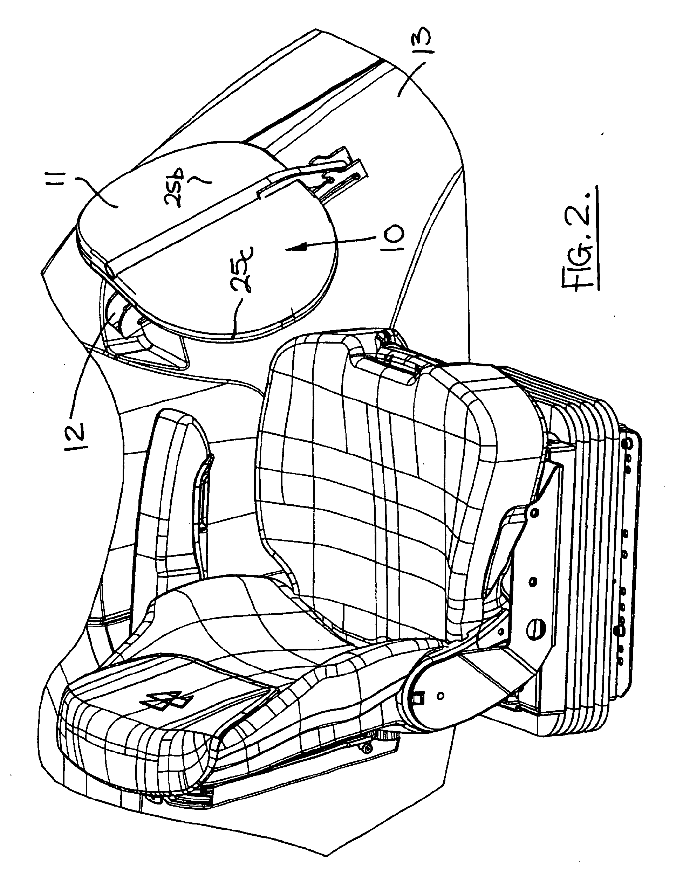

Referring to the drawings, the folding seat arrangement 10 comprises a seat 11 and a mounting support 12 which, as shown in Figures 1 and 2, can conveniently be mounted on the inside of the fender 13 of the rear wheel of a tractor adjacent the cab door.

The seat 11 comprises a seat pan 14 which comprises two half panels 14a welded on either side of a central tube 15 with reinforcing plates 16 sandwiched between the panels 14a and the tube 15 in cut outs 17. The seat pan is reinforced on its underside by ribs 18 again welded in position. The end portion 19 of tube 15 is bent slightly and together with the reinforcing plates 16 forms an arm 20 which projects from the rear of the seat pan. This arm 20 includes two pairs of aligned holes 21 and 22 which can receive cross-pins 23 and 24 respectively as will be described below. Pins 23 and 24 are spring roll pins which grip holes 21 and 22 when inserted.

The seat pan is completed by an upholstered cushion 25a also a lower plastic skin 25b which is shown in Figures 1 and 2. Figure 2 shows an alternative seat pan construction in which the separate panels 14 and ribs 18 are replaced by a single seat pan 25b which has a raised stiffening edge flange 25c. This construction is better suited to high volume production.

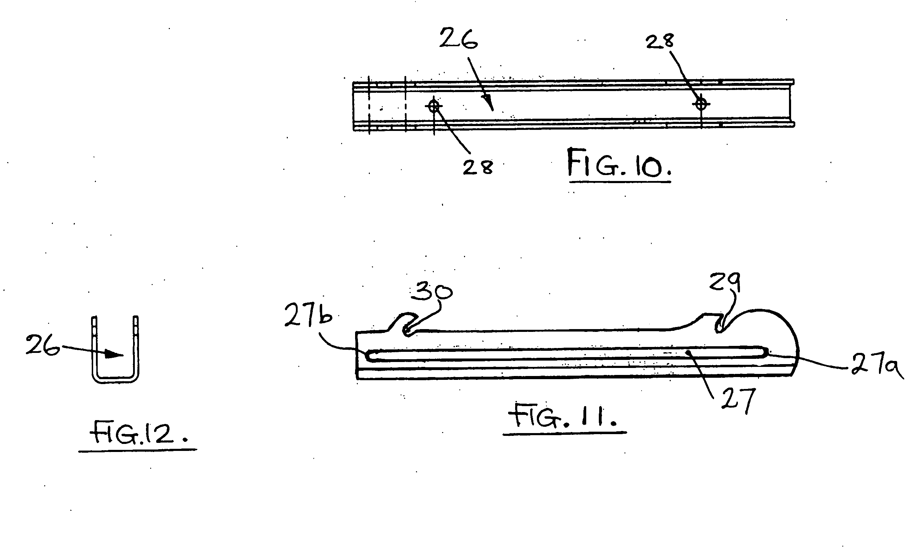

The seat is mounted on a mounting support 26 shown in detail in Figures 10 to 12 which is generally of a channel shaped cross-section. Each side of the channel is provided with a track in the form of a slot 27. This track is arranged to be bolted to the inside of the rear fender 13 of the tractor cab by bolts extending through holes 28. Each side of the channel shaped support 26 is provided with an upper notch 29 and lower notch 30 whose operation will be described below.

The seat is mounted on the support 26 by inserting the pin 23 through the slots 27 and through the aligned holes 21 in the arm 20 of the seat. The second pin 24 is inserted through the aligned holes 22 in the arm 20 and is engageable with upper notch 29 when the seat is in its generally horizontal working position and with the lower notch 30 when the seat is in its generally vertical stowed position.

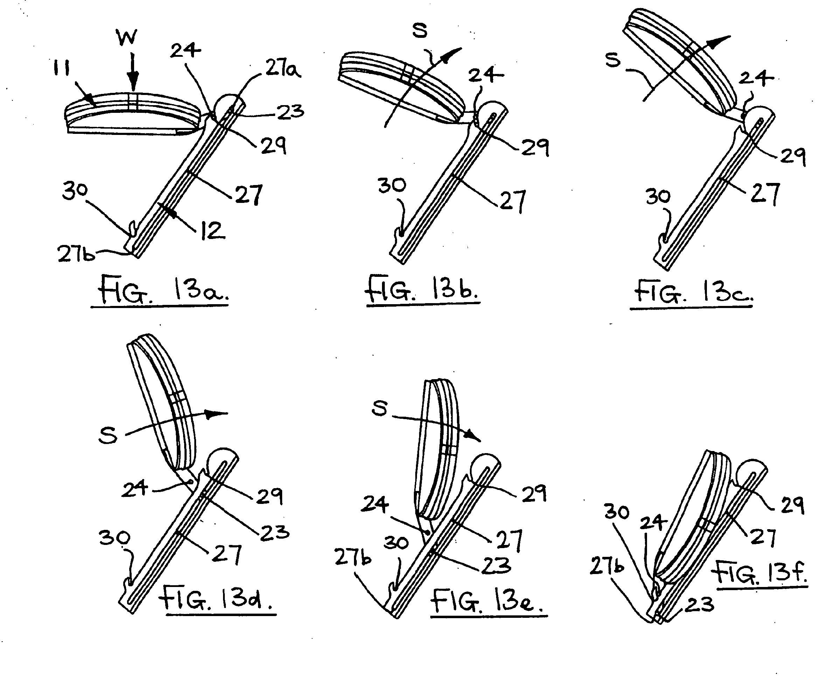

Figures 13a to 13f show the seat in various position. The working position of the seat is shown in Figure 13a when the pin 24 is engaged in the upper notches 29 and the pivot pin 23 is adjacent the upper end 27a of the slots 27. As will be appreciated when the seat is in this position any weight W applied to the seat tends to force the pivot 23 towards and into contact with the upper end 27a of the notches 27.

To move the seat to the fully stowed position shown in Figure 13f the seat 11 is pivoted clockwise as viewed in Figures 13a to 13f (see arrow S) so that the pin 24 disengages the upper notches 29 (see Figures 13b and 13c) and the pivot pin 23 begins to slide down the slots 27 (Figures 13d and 13e) until the seat arrives in the fully stowed position shown in Figure 13f when the pin 24 engages in lower notches 30 and the pivot pin 23 is adjacent the lower end 27b of the slots 27.

As will be appreciated, when the seat is in the fully stowed position shown in Figure 13f the weight of the seat tends to retain the pin 27 in engagement with lower notches 30 and the pivot pin 23 in the lower end 27b of slots 27. Thus the seat has a stable stowed position.

The present invention thus provides a folding passenger seat which is particularly suitable for use in an agricultural tractor or combine and which, when mounted on the inner surface of the fender of the rear wheel and placed adjacent the entry door of the cab, occupies very little space when in the stowed position but offers a fully serviceable passenger seat when in the working position.

## Claims

1. A folding passenger seat arrangement (10) for use in a tractor, the seat arrangement comprising a mounting support (12) for mounting on the inside of as fender (13) of a rear wheel of a tractor and a seat (11) which is pivotally and slidably mounted on the support for movement between a generally horizontal working position and a lower generally vertical stowed position, **characterised in that** the mounting support (12) is a single channel section (26) with a track slot (27) cut in two opposing sides of the channel, the seat including, a seat pan (14) and an arm (20) projecting therefrom which includes, at a location remote from the pan, pivot means in the form of first pin means (23)which projects from the arm and engages and slides along the slots (27) in the channel as the seat pivots between its working and stowed positions, the arm (20) also including first abutment means in the form of a second pin means (24) which projects from the arm at a location intermediate the first pin means and the seat pan, the second pin means (24) engaging the second abutment means in the form of upper notches (29) formed in the sides of the channel (26) adjacent the upper end of the channel when the seat is in its working position and also engaging the third abutment means in the form of lower notches (30) formed in the sides of the channel (26) adjacent the lower end of the channel when the seat is in its stowed position.

2. A seat arrangement according to Claim **Characterised in that** the pivot means (23) contacts an upper end (27a) of the track (27) in the mounting support when the seat is in its working position, the seat being held generally horizontal by first abutment (24) on the seat, located between the pivot means and the seat, which contacts a second abutment (29) on the mounting support (12) so that any weight placed on the seat forces the pivot means (23) against the upper end (27a) of the track.

3. A seat arrangement according to Claim 2 **characterised in that** the mounting support (12) includes a third abutment (30) located below the second abutment (29) which is contacted by the first abutment (24) when the seat (11) is moved to its stowed position.

4. A seat arrangement according to Claim 3 **characterised in that**, when the seat (11) is in its stowed position, the weight of the seat forces the pivot means (23) into contact with a lower end (27b) of the track (27) and the first abutment (24) into contact with the third abutment (30) thus maintaining the seat safely stowed.

## Patentansprüche

1. Klappbare Sitzanordnung (10) für einen Benutzer oder Passagier zum Gebrauch in einem Zugfahrzeug, insbesondere Traktor, mit einer Anbauabstützung (12) zum Anbauen an die Innenseite eines Kotflügels (13) eines hinteren Rades eines Zugfahrzeugs und einem Sitz (11), der verschwenkbar und gleitend an der Anbauabstützung angebaut ist für eine Bewegung zwischen einer grundsätzlich horizontalen Arbeitsposition und einer niedrigeren grundsätzlich vertikalen Verstau-Position, **dadurch gekennzeichnet, dass** die Anbauabstützung (12) einen einzelnen Kanalabschnitt (26) aufweist mit Bahnschlitzen (27), die in zwei gegenüberliegende Seiten des Kanals geschnitten sind, wobei der Sitz eine Sitzpfanne (14) und einen hiervon abstehenden Arm (20) aufweist, der an einem Ort abseits der Pfanne Schwenkmittel aufweist in Form eines ersten Pin-artigen Organs (23), welches von dem Arm absteht und eingreift in die Schlitze oder in Wechselwirkung tritt mit den Schlitzen (27) in dem Kanal und entlang der Schlitze (27) gleitet mit Verschwenkung des Sitzes zwischen der Arbeitsposition und der Verstau-Position, und der Arm (20) auch mindestens ein erstes Anschlagorgan in Form eines zweiten Pin-artigen Organs (24) aufweist, welches von dem Arm absteht an einem Ort zwischen dem ersten Pin-artigen Organ und der Sitzpfanne, und das zweite Pin-artige Organ (24) eingreift in mindestens ein zweites Anschlagorgan oder in Wechselwirkung tritt mit mindestens einem zweiten Anschlagorgan in Form oberer Einbuchtungen oder Nuten (29), die in den Seiten des Kanals (26) benachbart dem oberen Ende des Kanals gebildet sind, wenn sich der Sitz in seiner Arbeitsposition befindet, und eingreifen in mindestens ein drittes Anschlagorgan oder in Wechselwirkung treten mit mindestens einem dritten Anschlagorgan in Form unterer Einbuchtungen oder Nuten (30), die in den Seiten des Kanals (26) benachbart dem unteren Ende des Kanals gebildet sind, wenn sich der Sitz in seiner Verstau-Position befindet.

2. Sitzanordnung nach Anspruch 1, **dadurch gekennzeichnet, dass** das Schwenkmittel (23) ein oberes Ende (27a) der Bahn (27) in der Anbauabstützung kontaktiert, wenn sich der Sitz in seiner Arbeitsposition befindet, wobei der Sitz durch das erste Anschlagorgan (24) an dem Sitz, welches zwischen dem Schwenkmittel und dem Sitz angeordnet ist und ein zweites Anschlagorgan (29) auf oder an der Anbauabstützung (12) kontaktiert, grundsätzlich horizontal gehalten wird, so dass sämtliches Gewicht, welches auf dem Sitz angeordnet ist, das Schwenkmittel (23) gegen das obere Ende (27a) der Bahn beaufschlagt.

3. Sitzanordnung nach Anspruch 2, **dadurch gekennzeichnet, dass** die Anbauabstützung (12) ein drittes Anschlagorgan (30) aufweist, welches unter dem zweiten Anschlagorgan (29) angeordnet ist und von dem ersten Abstützorgan (24) kontaktiert wird, wenn der Sitz (11) in die Verstau-Position bewegt ist.

4. Sitzanordnung nach Anspruch 3, **dadurch gekennzeichnet, dass**, wenn sich der Sitz (11) in der Verstau-Position befindet, das Gewicht des Sitzes das Schwenkmittel (23) in Kontakt mit einem unteren Ende (27b) der Bahn (27) und das erste Anschlagorgan (24) in Kontakt mit dem dritten Anschlagorgan (30) beaufschlagt, wodurch der Sitz sicher verstaut gehalten wird.

## Revendications

1. Agencement de siège de passager pliable (10) destiné à être utilisé sur un tracteur, l'agencement de siège comprenant un support de montage (12) destiné à assurer le montage sur la face interne d'un garde-boue (13) d'une roue arrière d'un tracteur et un siège (11) qui est monté de manière à pouvoir pivoter et coulisser sur le support afin de pouvoir passer entre une position opérationnelle sensiblement horizontale et une position repliée inférieure sensiblement verticale, **caractérisé en ce que** le support de montage (12) est une section à canal unique (26), une fente de piste (27) étant découpée sur deux faces opposées du canal, le siège comportant un plateau de siège (14) et un bras (20) s'étendant à partir de celui-ci qui comporte, à un emplacement distant du plateau, des moyens formant pivot sous la forme de premiers moyens en broche (23) qui s'étendent à partir du bras et s'assemblent et coulissent le long des fentes (27) sur le canal lorsque le siège pivote entre ses positions opérationnelle et repliée, le bras (20) comportant aussi un premier moyen formant butée sous la forme d'un second moyen en broche (24) qui s'étend à partir du bras à un emplacement intermédiaire entre les premiers moyens en broche et le plateau de siège, le second moyen en broche (24) étant couplé au deuxième moyen formant butée sous la forme d'encoches supérieures (29) formées sur les côtés du canal (26) de manière adjacente à l'extrémité supérieure du canal lorsque le siège est dans sa position opérationnelle et couplé aussi au troisième moyen formant butée sous la forme d'encoches inférieures (30) formées sur les côtés du canal (26) de manière adjacente à l'extrémité inférieure du canal lorsque le siège est dans sa position repliée.

2. Agencement de siège selon la revendication 1 **caractérisé en ce que** le moyen de pivot (23) est en contact avec une extrémité supérieure (27a) de la piste (27) sur le support de montage lorsque le siège est dans sa position opérationnelle, le siège étant maintenu sensiblement horizontal par une première butée (24) sur le siège, située entre le moyen formant pivot et le siège, qui est en contact avec une deuxième butée (29) sur le support de montage (12) de telle sorte qu'un poids quelconque placé sur le siège force le moyen formant pivot (23) contre l'extrémité supérieure (27a) de la piste.

3. Agencement de siège selon la revendication 2, **caractérisé en ce que** le support de montage (12) comporte une troisième butée (30) située au-dessous de la deuxième butée (29) qui est mise en contact avec la première butée (24) lorsque le siège (11) est déplacé vers sa position repliée.

4. Agencement de siège selon la revendication 3, **caractérisé en ce que**, lorsque le siège (11) est dans sa position repliée, le poids du siège applique le moyen formant pivot (23) en contact avec une extrémité inférieure (27b) de la piste (27) et la première butée (24) en contact avec la troisième butée (30) maintenant ainsi le siège replié de manière sûre.
